Europäisches Patentamt

European Patent Office

Office européen des brevets

(19)

(11) Numéro de publication: **0 226 491**
**B1**

(12) **FASCICULE DE BREVET EUROPEEN**

(45) Date de publication du fascicule du brevet: **18.07.90**

(51) Int. Cl.⁵: **G 01 G 19/02, G 01 G 5/04**

(21) Numéro de dépôt: **86402483.1**

(22) Date de dépôt: **06.11.86**

(54) **Dispositif de mesure de charges roulantes.**

(30) Priorité: **06.11.85 FR 8516434**

(43) Date de publication de la demande:
**24.06.87 Bulletin 87/26**

(45) Mention de la délivrance du brevet:
**18.07.90 Bulletin 90/29**

(84) Etats contractants désignés:
**BE DE ES FR GB IT NL SE**

(56) Documents cités:
**DE-A-3 336 408**
**FR-A-2 057 689**
**FR-A-2 251 814**
**FR-A-2 405 475**

(73) Titulaire: **Timbert, Francois**
**40, Route de Provins**
**F-77130 Montereau (FR)**

(72) Inventeur: **Timbert, Francois**
**40, Route de Provins**
**F-77130 Montereau (FR)**

(74) Mandataire: **Laget, Jean-Loup et al**
**Cabinet Pierre Loyer 77, rue Boissière**
**F-75116 Paris (FR)**

Courier Press, Leamington Spa, England.

## Description

L'invention concerne un dispositif de mesure de charges roulantes.

Pour mesurer des charges portées par un véhicule, il est connu par le FR—A—2.057.689 de disposer dans une fosse deux plateaux flottants destinés à mesurer chacun la charge d'un demi-essieu. Comme les plateaux sont flottants, il est nécessaire d'une part de les étayer pour leur donner de la stabilité, d'autre part d'immobiliser le véhicule avant toute mesure.

Un but de l'invention est de mettre à la disposition de l'exploitant agricole, ou de l'industriel, un dispositif de mesure de charges roulants suffisamment rustique pour être peu onéreux, tout en donnant une mesure assez précise pour les besoins de la gestion quotidienne.

Un autre but de l'invention est de proposer un dispositif de mesure relativement simple pour ne pas nécessiter une infrastructure lourde.

Un but encore de l'invention est de proposer un dispositif de charges roulantes qui assure la mesure des charges sans que le véhicule soit à l'arrêt.

L'invention a pour objet un dispositif de mesure de charges roulantes, du type comportant un bâti inséré dans le sol et un plateau reposant sur des pesons logés dans le bâti, caractérisé en ce qu'il comporte:

—deux pesons à soufflet remplis d'huile et

—un circuit électronique comprenant des capteurs, une unité centrale à microprocesseur et mémoires, des périphériques de paramétrage, des afficheurs et éventuellement un micro-ordinateur extérieur,

—le circuit électronique revecant des signaux représentatifs de la mesure effectuée par chacun des deux pesons, et fournissant une mesure de la charge d'un essieu au cours du franchissement du dispositif de mesure, sans nécessité d'arrêt, le plateau, porté par une poutre H reposant sur les deux pesons, des butées étant disposées sur le bâti pour soutenir le plateau lors du franchissement du dispositif de mesure par l'essieu.

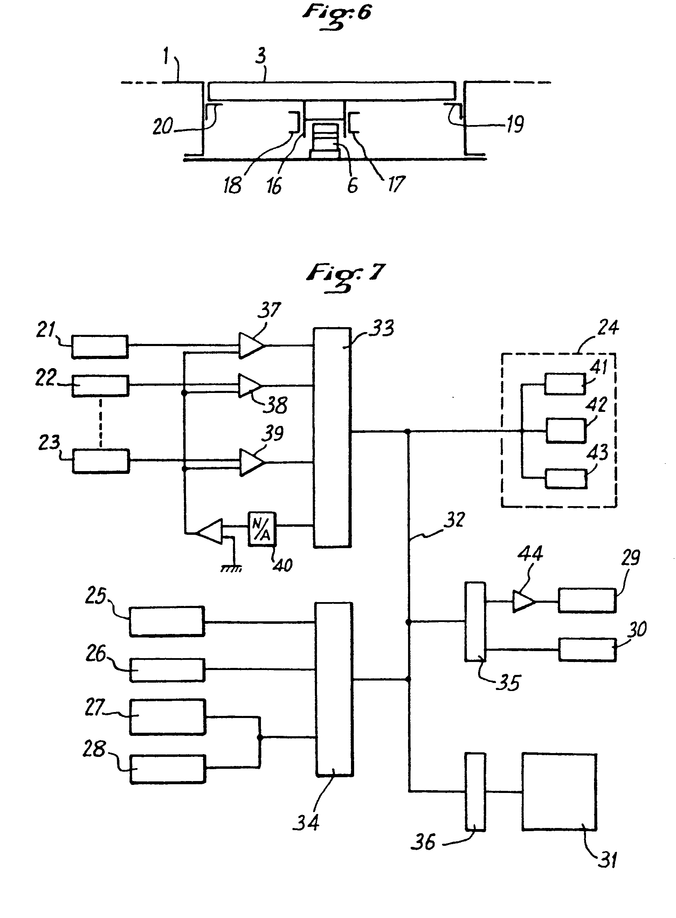

D'autres caractéristiques ressortiront de la description qui suit faite avec référence au dessin annexé (seulement les figures 6 et 7 étant conformes à l'objet de l'invention) sur lequel on peut voir:

Figure 1: un schéma de principe d'un dispositif de mesure de charges roulantes;

Figure 2: une vue en perspective d'un premier mode de réalisation d'un dispositif de mesure de charges roulantes;

Figure 3 à Figure 5: des vues de dessus de différents modes de réalisation d'un dispositif de mesure de charges roulantes.

Figure 6: une vue en coupe transversale d'un mode de réalisation de l'invention à plateau non articulé.

Figure 7: un schéma du circuit électronique utilisable.

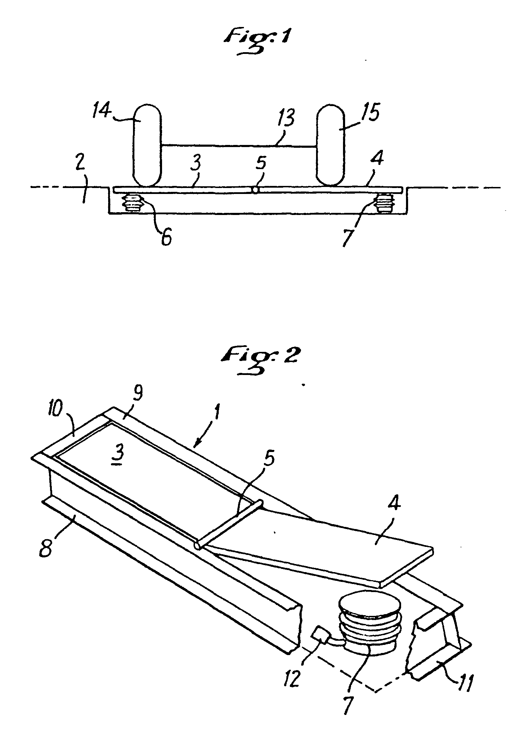

En se reportant à la figure 1, on voit que le dispositif de mesure se compose d'un bâti mécano-soudé 1, encastré dans le sol 2, comportant deux plateaux 3, 4 pivotants autour d'un axe central 5, et affleurant la surface du sol.

Ces plateaux reposent sur deux pesons 6, 7, respectivement, logés dans le bâti 1.

Dans l'exemple de réalisation représenté sur la figure 2, le bâti 1 est constitué d'un assemblage de fers en U; deux logerons 8, 9 et deux traverses 10, 11. L'axe central 5 est représenté reposant sur les longerons en leur milieu. Il va de soi qu'on peut prévoir des guideaxe pour le mainenir en position sur les longerons, ou des orifices percés dans les longerons pour constituer des paliers de guidage de l'axe 5. Les deux plateaux 3, 4 sont montés pivotants sur cet axe 5 par tout moyen classique approprie. Les plateaux sont prévus pour s'insérer dans le bâti sans frottement, et pour reposer sur les pesons 6, 7. Ces pesons sont de préférence des pesons à soufflet rempli d'huile par exemple. Ils sont chacun relié à un transmetteur de pression 12, lui-même relié par câble à un circuit électronique de traitement du signal représentatif de la pression dans le peson.

Il va de soi que les pesons sont posés sur une base rigide dont la position par rapport au bâti est fixe.

Lorsqu'un essieu 13 de charge roulante se présente sur le dispositif de mesure, les deux roues 14 et 15 (figure 1) peuvent avoir une position quelconque par rapport à l'axe 5. Le seul impératif est qu'elles soient chacune sur l'un des plateaux. Du fait que les plateaux 3 et 4 sont articulés sur l'axe 5, chacun des pesons 6 et 7 mesure une pression fonction de la charge de la roue correspondante, la somme des deux indications fournies par les deux pesons correspondant à la charge de l'essieu. L'étalonnage des mesures est facilement assuré par voie électronique au moment de l'installation par exemple.

Pour mesurer la charge roulante, on procède par addition des mesures de charges des différents essieux du véhicule. Pour mesurer la charge du véhicule, on procède par différence entre les mesures correspondant d'une part au véhicule chargé, d'autre part au véhicule vide, selon la méthode habituelle.

A titre d'exemple, le bâti 1 présente une longueur de l'ordre de 3 m, une largeur de l'ordre de 0,3 m et une profondeur de l'ordre de 0,2 m. On voit donc que l'infrastructure à mettre en place se limite à une saignée dans le sol pour y loger le bâti.

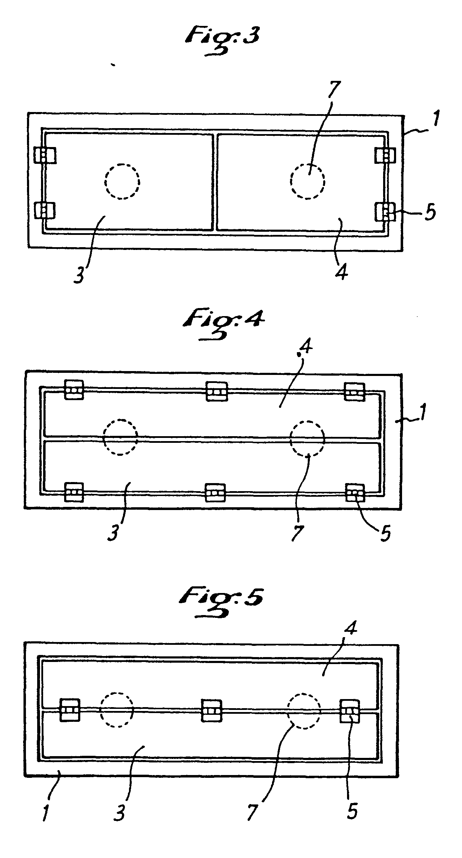

Dans le mode de réalisation de la figure 3, les deux plateaux 3 et 4 sont indépendants et ils sont articulés sur les petits côtés du bâti 1.

Dans le mode de réalisation de la figure 4, les deux plateaux 3 et 4 sont indépendants et ils sont articulés sur les grands côtés du bâti 1.

Dans le mode de réalisation de la figure 5, les deux plateaux 3 et 4 sont articulés entre eux, leur axe d'articulation correspondant à l'axe longitudinal du bâti.

La figure 6 décrit un mode de réalisation de dispositif de mesure de charges roulantes à un seul plateau 3. Ce plateau repose sur une poutre 16 à section en H, par exemple. Cette poutre reposé à son tour sur les deux pesons 6 et 7. Elle est encadrée par deux guides 17, 18 fixes par rapport au bâti 1. Pour éviter le basculement du plateau 3 lorsqu'une roue passe sur le plateau, le bâti 1 porte des butées 19, 20 susceptibles de supporter les bords du plateau. Lorsque la roue se trouve au milieu du plateau, du fait de la présence de la poutre en H, le plateau est horizontal et ne reposé pas sur les butées. La mesure peut donc être effectuée normalement.

La figure 7 représente un schéma de circuit électronique. Ce circuit comprend une série de capteurs 21, 22, 23, une unité centrale 24, des périphériques 25 à 28 de paramétrage, des afficheurs 29, 30 et un microordinateur extérieur éventuel 31. Ces différents éléments sont réunis par un bus 32, éventuellement par l'intermédiaire d'interfaces 33 à 36.

Dans le détail, on trouve, tout d'abord les deux capteurs 21 et 22 qui sont les capteurs de pression liés aux pesons 6 et 7 respectivement. Les autres capteurs (23) sont par exemple des capteurs de température fournissant des informations traitées par l'unité centrale pour assurer des corrections de mesure en fonction de la température, éventuellement. Les signaux en provenance des capteurs sont appliqués à l'interface 33 par l'intermédiaire de comparateurs 37, 38, 39 dont une entrée reçoit un signal de référence en provenance de l'interface 33 par l'intermédiaire d'un convertisseur numérique analogique 40.

L'unité centrale 24 comprend un microprocesseur 41, une mémoire morte 42 et une mémoire vive sauvegardée 43.

Les afficheurs sont un afficheur rapproche 30 et un afficheur déporté 29, alimenté par l'intermédiaire d'un amplificateur 44 et susceptible d'assurer un affichage de grandes dimensions.

Les périphériques de paramétrage sont par exemple: un commutateur d'échelle 25 définissant les gammes de poids mesurables; un temporisateur 26 définissant les intervalles de temps à respecter entre les passages d'essieux sur le dispositif de mesure; une imprimante 27 et un clavier 28.

Le fonctionnement du dispositif est le suivant: lorsqu'un essieu se présente et franchit le dispositif de mesure au ralenti mais sans nécessité d'arrêt: les capteurs de pression de pesons permettent une série de mesures donnant une image de la pesée effectuée par chacun des pesons. Cette série de mesure peut être représentée par une courbe passant par un maximum lorsque la roue est exactement au milieu du plateau, l'essieu étant alors à l'aplomb des pesons. Le microprocesseur qui reçoit pour chaque capteur c'est-à-dire pour chaque peson, cette série de points de mesure, en déduit une valeur de mesure correspondant au maximum de la courbe. Cette valeur est ensuite corrigée éventuellement pour tenir compte du fait que l'essieu est mobile et non pas arrêté sur le plateau. Cette correction est assurée à partir d'un étalonnage préalable effectué avec des charges connues, au moyen d'un micro- ordinateur extérieur par exemple, les données correspondantes étant en mémoire de l'unité centrale.

Ensuite, interviennent éventuellement des corrections liées par exemple à la température. On dispose alors, pour chaque peson, d'une valeur correspondant à la charge réelle mesurée par le pesons, lorsque l'essieu franchit le dispositif de mesure. L'unité centrale en deduit alors par sommation la charge totale de l'essieu qui est d'une part affichée, d'autre part mise en mémoire pour traitement ultérieur éventuel. Le dispositif de mesure permet ainsi, par exemple, des mesures de charges allant jusqu'à 100 tonnes par peson, avec une résolution de 0,2%.

Le dispositif de mesure des charges roulantes se caractérisé par sa simplicité de fabrication et de mise en oeuvre, la rusticité et la fiabilité de ses composants, et la facilité de son processus opératoire. Le circuit électronique de traitement des signaux de mesure peut avantageusement être doté d'une mémoire, de façon à permettre: d'une part une série de mesures en charge suivie d'une série de mesures à vide, d'autre part une totalisation des mesures pour donner par exemple la valeur de la récolte journalière ou saisonnière.

Il va de soi que le dispositif de mesure ne prétend pas être aussi précis que les ponts-bascules homologués des coopératives agricoles, mais sa précision est largement suffisante pour la gestion d'une exploitation agricole. Il est applicable au contrôle des poids de produits agricoles (céréales, vendange, betterave, etc. . .) dans les bennes roulantes, au contrôle des charges ou surcharges de camions, et plus généralement au contrôle des charges de tous véhicules roulants. Il peut en outre être utilisés au contrôle de charges individuelles disposées sur l'un des deux plateaux pivotants; dans ce cas, un seul des deux pesons fourni une indication de mesure.

**Revendication**

Dispositif de mesure de charges roulantes, du type comportant un bâti (1) inséré dans le sol et un plateau (3) reposant sur des pesons (6, 7) logés dans le bâti, caractérisé en ce qu'il comporte:

—deux pesons (6, 7) à soufflet remplis d'huile, et

—un circuit électronique comprenant des capteurs (21—23), une unité centrale (24) à microprocesseur (41) et mémoires (42, 43), des périphériques (25—28) de paramétrage, des afficheurs (29, 30) et éventuellement un micro-ordinateur extérieur (31),

—le circuit électronique recevant des signaux représentatifs de la mesure effectuée par chacun des deux pesons (6, 7), et fournissant une mesure de la charge d'un essieu au cours du franchissement du dispositif de mesure, sans nécessité d'arrêt, le plateau (3) étant porté par une poutre H (16) reposant sur les deux pesons (6, 7), des butées (19, 20) étant disposées sur le bâti (1) pour soutenir le plateau lors du franchissement du dispositif de mesure par l'essieu.

## Patentanspruch

Meßgerät für rollende Lasten, das ein im Boden eingebettetes Gestell (1) und eine auf im Gestell eingebauten Wiegeeinheiten (6, 7) liegende Brücke aufweist, dadurch gekennzeichnet daß es

—zwei mit ölgefüllten Faltenbälgen ausgerüstete Wiegeeinheiten (6, 7), und

—eine mit Sensoren (21—23), einer Zentraleinheit (24) mit Mikroprozessor (41) und Speichern (42, 43), Peripheriegeräten (25—28) für Parametereingabe, Anzeigegeräten (29, 30) und gegebenenfalls einem externen Mikrocomputer (31) ausgestattete elektronische Schaltung aufweist,

—wobei die elektronische Schaltung der Messung jeder Wiegeeinheit (6, 7) entsprechende Signale erhält und ein Maß der Belastung einer Achse während des Überfahrens des Meßgerätes abgibt, ohne Anhalten, und wobei die Brücke (3) von einem auf beiden Wiegeeinheiten liegenden I-Träger (16) getragen wird, und Anschläge (19, 20) am Gestell angeordnet sind, um die Brücke bei dem Überfahren des Meßgerätes durch die Achse zu unterstützen.

## Claim

A device for measuring the weight of rolling loads, of the type comprising a frame (1) embedded in the ground and a plate (3) supported by weighing means (6, 7) placed in the frame, characterized in that it comprises:

—two weighing means (6, 7) with oil filled bellows, and

—an electronic circuit comprising sensors (21—23), a central unit (24) having a microprocessor (41) and memories (42, 43), peripherals (25—28) for parameter setting, indicators (29, 30) and, eventually, an external microcomputer (31),

—wherein the electronic circuit receives signals representing the measurement of each one of the two weighing means (6, 7) and provides a measured value of the weight of a wheel axle when the measuring device is run over, without stopping, the plate (3) being carried by a H-beam (16) resting on the two weighing means (6, 7), stops (19, 20) being arranged on the frame (1) in order to support the plate when the measuring device is run over by the wheel axle.

Fig. 1

Fig. 2

Fig.3

Fig.4

Fig.5

Fig:6

Fig:7